Europäisches Patentamt

European Patent Office

Office européen des brevets

(11) Veröffentlichungsnummer: **0 046 993**
**B1**

(12) # EUROPÄISCHE PATENTSCHRIFT

(45) Veröffentlichungstag der Patentschrift:
05.12.84

(21) Anmeldenummer: 81106713.1

(22) Anmeldetag: 28.08.81

(51) Int. Cl.³: **F 27 B 9/12,** F 27 B 9/20,
F 27 D 7/06

(54) Verfahren zur Verhinderung der Reoxidation des Brenngutes in der Kühlzone für einen Rollenofen.

(30) Priorität: 28.08.80 DE 3032450

(43) Veröffentlichungstag der Anmeldung:
10.03.82 Patentblatt 82/10

(45) Bekanntmachung des Hinweises auf die Patenterteilung:
05.12.84 Patentblatt 84/49

(84) Benannte Vertragsstaaten:
FR IT NL

(56) Entgegenhaltungen:
DE - A - 1 583 447
DE - A - 2 708 783
DE - A - 2 824 367
DE - B - 1 177 062
DE - B - 1 245 042
DE - C - 976 094
GB - A - 954 674
US - A - 2 968 894

(73) Patentinhaber: **Buchtal GmbH Keramische Betriebe,
D-8472 Schwarzenfeld/Opf. (DE)**

(72) Erfinder: **Cremer, Gottfried, Dr., Steyrer Weg 6,
D-5000 Köln 40 (Junkersdorf) (DE)**

(74) Vertreter: **Betzler, Eduard, Dipl.-Phys. et al,
P.O.Box 700209 Plinganserstrasse 18a,
D-8000 München 70 (DE)**

ACTORUM AG

**Beschreibung**

Die Erfindung betrifft ein Verfahren zur Verhinderung der Reoxidation des Brenngutes in der Kühlzone für einen aus Vorheiz-, Brenn- und Kühlzone bestehenden Rollenofen, durch den das Brenngut in Form keramischer Fliesen oder Platten ohne stützende Brennhilfsmittel aus feuerfestem Material einschichtig hindurchgeführt wird.

In der Kühlzone solcher Öfen wird im allgemeinen mit sogenannter Sturzkühlung gearbeitet, d.h. es werden geeignete Mengen von Luft in die Kühlzone eingeführt und auf das Brenngut zur Einwirkung gebracht. Dabei kommt es unvermeidbar, auch wenn die Brennzone gegen die Kühlzone durch eine Schürze abgeschlossen ist, zu Rückwirkungen aus der Kühlzone in die Brennzone und, wenn diese reduzierend gefahren wird, zu einer Reoxidierung des Brenngutes in der Kühlzone und wenigstens in dem der Kühlzone benachbarten Bereich der Brennzone. Will man eine solche Reoxidierung des Brenngutes in der Kühlzone und ein Zurückwirken der Reoxidierung in die der Kühlzone benachbarten Bereiche der Brennzone verhindern, so könnte dies nach der DE-OS 2 824 367 beispielsweise dadurch erfolgen, dass man die der Reduktion in der Kühlzone dienenden Mittel in den Ofen intermittierend unter hohem Druck und in solchen Anteilen und Zeitabständen eingibt, dass der nach jeder durch Eingabe eines Anteils erzielten Teilreduktion verbleibende Überschuss des Reduktionsmittelanteils so gering ist, dass er in den zwischen aufeinanderfolgenden Eingaben liegenden Pausen ohne zusätzliche Luftzuführung durch die neutrale Ofenatmosphäre abgebrannt wird.

Es ist erkennbar, dass zur Durchführung eines solchen Verfahrens ein ausserordentlich kompliziertes Steuersystem erforderlich ist.

Aufgabe der Erfindung ist es durch Anwendung einfachster Mittel die Reoxidation in der Kühlzone bei solchen Rollenöfen zu verhindern.

Diese Aufgabe wird erfindungsgemäss dadurch gelöst, dass die Kühlzone mittels eines strömenden Wärmeträgers indirekt gekühlt wird.

Vorzugsweise wird als strömender Wärmeträger ein flüssiger Wärmeträger verwendet.

Die Verwendung einer indirekten Kühlung ist zwar bei Tunnelöfen bereits bekannt, dient dort aber einem ganz anderen Zweck, nämlich wenigstens einem Teil der im Tunnelofenwagen und dem aufgestapelten Brenngut enthaltenen grossen Wärmemenge wiederzugewinnen, die ansonsten in einer langen Kühlzone oder gegebenenfalls sogar erst ausserhalb des Tunnelofens völlig ungenutzt beseitigt werden müsste; ausserdem soll eine gleichmässige Kühlwirkung auf innen- und aussenliegende Bereiche des Brenngutes im Tunnelofen erzielt werden.

Die erfindungsgemässe Anwendung der indirekten Kühlung der Kühlzone beim Rollenofen mittels eines strömenden, vorzugsweise flüssigen Wärmeträgers, dient jedoch dem Zweck des Verhinderns der Reoxidation des Brenngutes.

Beim Rollenofen ist das Verhindern der Reoxidation im Gegensatz zum Tunnelofen für das Brenngut, das in Form von keramischen Fliesen oder Platten den Ofen durchläuft, besonders wichtig.

Wenn für die Kühlung der Kühlzone ein flüssiger Wärmeträger, wie beispielsweise Wasser eingesetzt wird, das durch Rohrschlangen oder -register in der Kühlzone über dem Brenngut geführt wird, ergibt sich die gewünschte schroffe Abkühlung des Brrnngutes in der Kühlzone, ohne dass jedoch die Gefahr der Beeinflussung der Atmosphäre durch eingeführte Kühlluft besteht.

Um zu vermeiden, dass von den den Wärmeträger führenden Rohrschlangen oder -registern abplatzender Zunder od. dgl. auf das Brenngut fällt, lassen sich diese Rohrschlangen oder -register gegen das Brenngut abschirmen, wobei in weiterer Ausbildung der Erfindung die Strahlungsflächen der den Wärmeträger führenden Rohrschlangen oder -register gegen das Brenngut regelbar abgeschirmt sind, so dass nicht nur das Brenngut geschützt wird, sondern der Kühlvorgang auch in beliebiger und optimaler Weise gesteuert werden kann.

Vorzugsweise sind die Rohrschlangen oder -register quer zur Fahrtrichtung des Brenngutes durch den Brennofen angeordnet, weil dann die Einspeisung und Ableitung des Wärmeträgers besonders einfach ist. Auch die Anordnung und Bedienung der Abschirmung ist bei einer solchen Anordnung der Rohrschlangen oder -register wesentlich einfacher.

Die regelbare Abschirmung besteht vorzugsweise aus jalousieartig angeordneten, verdrehbaren, paddelartigen Elementen. Diese Elemente decken im geschlossenen Zustand der Abschirmung die Kühlschlangen oder -register vollständig ab und lassen durch leichtes Verdrehen Schlitze frei, durch die die um die Kühlschlangen oder -register vorhandene stark gekühlte Atmosphäre nach unten sturzartig auf das Brenngut zur Einwirkung gelangen kann.

Anstelle der jalousieartigen Vorhänge kann man auch Schlitzplatten verwenden, die sich in gewünschter Weise wechselseitig so übereinanderschieben lassen, dass mehr oder weniger grosse Öffnungen für den Durchtritt gekühlter Atmosphäre nach unten auf das Brenngut zur Verfügung stehen. Durch die Verstellbarkeit der Abschirmung ist es auch möglich, den Kühlprozess in der Kühlzone in beliebiger Weise zu beeinflussen.

Die den Wärmeträger führenden Rohrschlangen oder -register können an Wärme wiedergewinnende oder wiedernutzbarmachende Anlagen oder Ofenteile angeschlossen werden.

Die Zeichnung zeigt in

Fig. 1 eine schematische Draufsicht auf einen Brennofen;

Fig. 2 einen Schnitt längs der Linie II–II der Fig. 1;

Fig. 3 einen Teillängsschnitt durch die Kühlzone.

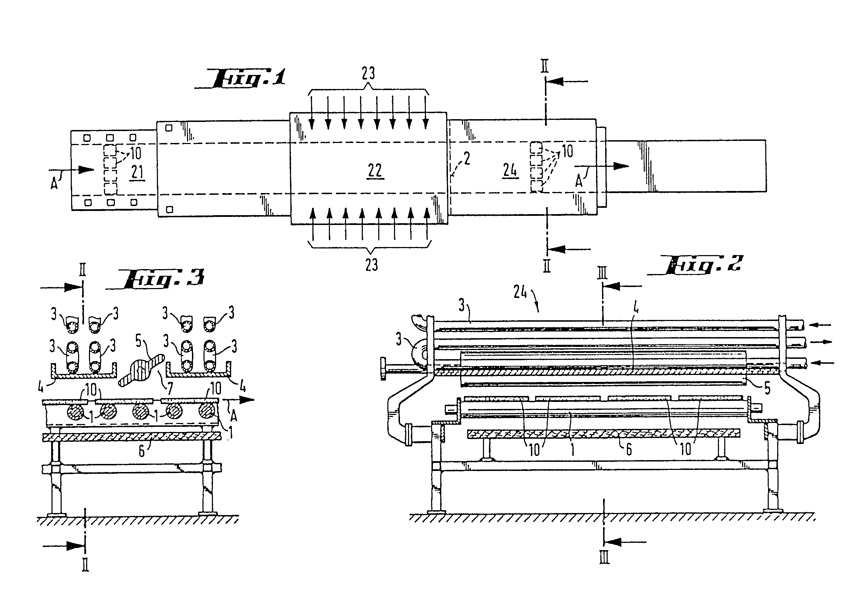

Bei einem in Richtung des Pfeiles A mit dem zu brennenden Gut 10, insbesondere keramischen Platten, beschickten Ofen sind eine Vorheizzone 21, eine Brennzone 22, die in Richtung der Pfeile 23 mittels Brenner beheizt wird, und eine Kühlzone 24 vorgesehen, aus der das fertige gebrannte und gekühlte Brenngut 10 austritt. Das Brenngut 10 wird mittels Rollen 1 durch den Ofen transportiert, von denen bei 1 in Fig. 2, die einen Schnitt durch die Kühlzone 24 längs der Linie II–II der Fig. 1 darstellt, erkennbar ist. Solche Rollen 1 bilden vom Ofeneingang bis zum Ofenausgang einen Rollenteppich und sind von aussen her angetrieben, so dass sie das auf ihnen lagernde Brenngut 10 durch den Ofen hindurchfördern. In der Kühlzone 24 erfolgte die Kühlung bis jetzt durch Kühlluft, die mittels über und unter dem Rollenteppich angebrachten Gebläsen in die Kühlzone eingeführt wurde. Trotz eines bei 2 in Fig. 1 angedeuteten Schurzes zwischen Brennzone 22 und Kühlzone 24 ist es nicht möglich, eine Rückwirkung dieser Kühlluft auf die Brennzone 22 und damit eine Beeinflussung der dort herrschenden Atmosphäre zu verhindern. Gemäss der Erfindung erfolgt die Kühlung des Brenngutes in der Kühlzone 24 nicht durch Einblasen von Kühlluft, sondern durch indirekte Kühlung mittels eines strömenden Wärmeträgers, vorzugsweise eines flüssigen Wärmeträgers, wie Wasser, der durch die vorzugsweise quer zur Fahrtrichtung A verlegten Kühlschlangen oder -register 3 im oberen Teil der Kühlzone 24 hindurchgeführt wird. Die Atmosphäre in der Kühlzone 24 bleibt dabei in Ruhe und es kann nicht mehr zu einer Rückwirkung in die Brennzone 22 kommen. Um ein Abfallen von sich allenfalls an den Kühlschlangen oder -registern 3 bildenden Zunder o.dgl. auf das Kühlgut 10 zu verhindern, ist einmal eine feste Abschirmung, wie sie bei 4 erkennbar ist, vorgesehen und zum anderen auch eine Abschirmung in Form einer Art von Jalousie, wie sie bei 5 in Fig. 3 angedeutet ist. Diese Jalousie 5 besteht aus paddelartigen, sich quer über die Kühlzone erstreckenden Elementen, die so eingestellt werden können, dass sie die Lücken 7 zwischen den festen Abschirmungen 4 praktisch überdecken. Sollten die Lücken 7 zu gross sein, so können nebeneinander so viele Elemente angeordnet sein, dass sie im quergestellten Zustand die Lücke gemeinsam verschliessen. Mit dieser Massnahme ist nicht nur ein zusätzlicher Schutz des Brenngutes 10 auf den Rollen 1 gewährleistet, sondern es ist auch möglich, den Kühlvorgang zu dosieren. Selbstverständlich kann anstelle der in Fig. 3 wiedergegebenen paddelartigen Elemente 5 auch eine Anordnung vorgesehen werden, die sich aus quer über die Kühlzone 24 oder in Längsrichtung der Kühlzone erstreckenden Schlitzplatten zusammensetzt, deren Schlitze gegenseitig mehr oder weniger zur Deckung gebracht werden können, so dass mehr oder weniger grosse Öffnungen 7 entstehen, durch die von den Kühlschlangen 3 oder -registern her die kühlende Einwirkung auf das auf den Rollen 1 geförderte Brenngut 10 erfolgt.

Unter dem aus den Rollen 1 bestehenden Rollenteppich befindet sich eine feuerfeste Isolierung 6.

Die Kühlschlangen oder -register 3 können in nicht dargestellter Weise an Anlagen oder Ofenteile angeschlossen sein, beispielsweise zur Vorheizzone 21 geführt sein, so dass ein Teil der Wärmeenergie des Wärmeträgers dort zum Vorheizen des Brenngutes 10 dienen kann. Man kann die von dem Wärmeträger aufgenommene Wärmemengen auch in anderer Weise z.B. zum Trocknen, weiterverwenden.

## Patentansprüche

1. Verfahren zur Verhinderung der Reoxidation des Brenngutes in der Kühlzone für einen aus Vorheiz-, Brenn- und Kühlzone bestehenden Rollenofen, durch den das Brenngut in Form keramischer Fliesen oder Platten ohne stützende Brennhilfsmittel aus feuerfestem Material einschichtig hindurchgeführt wird, dadurch gekennzeichnet, dass die Kühlzone mittels eines strömenden Wärmeträgers indirekt gekühlt wird.

2. Verfahren nach Anspruch 1, dadurch gekennzeichnet, dass als strömender Wärmeträger ein flüssiger Wärmeträger verwendet wird.

3. Rollenofen zur Durchführung des Verfahrens nach Anspruch 1 mit einer Vorheiz-, Brenn- und Kühlzone, dadurch gekennzeichnet, dass in der Kühlzone über dem Brenngut den Wärmeträger führende Rohrschlangen oder -register angeordnet sind, deren Strahlungsflächen gegen das Brenngut regelbar abgeschirmt sind.

4. Rollenofen nach Anspruch 3 mit einer Vorheiz-, Brenn- und Kühlzone, dadurch gekennzeichnet, dass die Rohrschlangen oder -register in der Kühlzone quer zur Fahrtrichtung des Brenngutes angeordnet sind.

5. Rollenofen nach Anspruch 3 oder 4 mit einer Vorheiz-, Brenn- und Kühlzone, dadurch gekennzeichnet, dass die Abschirmung in der Kühlzone aus jalousieartig angeordneten, verdrehbaren paddelartigen Elementen besteht.

6. Rollenofen nach Anspruch 3 mit einer Vorheiz-, Brenn- und Kühlzone, dadurch gekennzeichnet, dass die Abschirmung aus gegeneinander verschiebbaren Schlitzplatten besteht.

## Claims

1. A method for preventing reoxidation of the firing material in the cooling zone for a roller kiln comprising a preheating zone, a baking zone and a cooling zone, the firing material being passed through the kiln in one layer in the form of ceramic tiles or plates without any supporting kiln furniture made of refractory material, characterized in that the cooling zone is cooled indirectly by means of a heat transfer medium in flux.

2. A method as in claim 1, characterized in that a liquid heat transfer medium is used as the heat transfer medium influx.

3. A roller kiln for carrying out the method as in claim 1 comprising a preheating zone, a baking zone and a cooling zone, characterized in that pipe coils or registers conducting the heat transfer medium are arranged in the cooling zone above the firing material, the radiating areas of said pipes being adjustably shielded against the firing material.

4. A roller kiln as in claim 3 comprising a preheating zone, a baking zone and a cooling zone, characterized in that the pipe coils or registers are arranged in the cooling zone at right angles to the direction of movement of the firing material.

5. A roller kiln as in claim 3 or 4 comprising a preheating zone, a baking zone and a cooling zone, characterized in that the shielding in the cooling zone consists of rotatable paddle-like elements in a louver-like arrangement.

6. A roller kiln as in claim 3 comprising a preheating zone, a baking zone and a cooling zone, characterized in that the shielding consists of mutually displaceable slotted plates.

## Revendications

1. Méthode au but d'éviter la réoxydation des pièces de cuisson dans la zone de refroidissement d'un four à rouleaux comprenant une zone de préchauffage, une zone de cuisson et une zone de refroidissement, le passage à travers le four des pièces de cuisson en forme de carreaux ou de dalles céramiques s'effectuant à une seule couche et sans dispositif de maintien en matière réfractaire, caractérisée en ce que le refroidissement de la zone de refroidissement est obtenu indirectement au moyen d'un caloporteur coulant.

2. Méthode selon la revendication 1, caractérisée en ce que pour caloporteur coulant est utilisé un caloporteur liquide.

3. Four à rouleaux pour l'application de la méthode selon la revendication 1, comprenant une zone de préchauffage, une zone de cuisson et une zone de refroidissement, caractérisée en ce que des tuyaux ou serpentins comportant le caloporteur sont montés dans la zone de refroidissement au-dessus de la charge de cuisson, leurs surfaces de rayonnement étant protégées contre la charge de cuisson par une cuirasse réglable.

4. Four à rouleaux selon la revendication 3 comprenant une zone de préchauffage, une zone de cuisson et une zone de refroidissement, caractérisé en ce que les tuyaux ou serpentins dans la zone de refroidissement sont montés en position transversale par rapport au sens de passage de la charge de cuisson.

5. Four à rouleaux selon les revendications 3 ou 4 comprenant une zone de préchauffage, une zone de cuisson et une zone de refroidissement, caractérisé en ce que la cuirasse dans la zone de refroidissement se constitue d'éléments en forme de pagaie, mis en disposition de jalousies et pouvant être tordus.

6. Four à rouleaux selon la revendication 3 comprenant une zone de préchauffage, une zone de cuisson et une zone de refroidissement, caractérisé en ce que la cuirasse se constitue de plaques à fente coulissant l'une par rapport à l'autre.

Fig. 1

Fig. 3

Fig. 2

0 046 993